(19) Europäisches Patentamt
European Patent Office
Office européen des brevets

(11) Veröffentlichungsnummer: **0 152 614**
**B1**

(12) # EUROPÄISCHE PATENTSCHRIFT

(45) Veröffentlichungstag der Patentschrift: **08.02.89**

(51) Int. Cl.⁴: **B 01 J 10/00**, B 01 F 3/04

(21) Anmeldenummer: **84116072.4**

(22) Anmeldetag: **21.12.84**

(54) **Verfahren zum Begasen von Flüssigkeiten.**

(30) Priorität: **17.02.84 DE 3405629**

(43) Veröffentlichungstag der Anmeldung: **28.08.85 Patentblatt 85/35**

(45) Bekanntmachung des Hinweises auf die Patenterteilung: **08.02.89 Patentblatt 89/6**

(84) Benannte Vertragsstaaten: **AT BE CH DE FR GB IT LI NL SE**

(56) Entgegenhaltungen:
**EP-A- 0 087 670**
**DE-A- 1 442 767**
**DE-A- 3 224 692**
**DE-A- 3 410 386**
**DE-B- 1 091 568**

**CHEMIE-INGENIEUR-TECHNIK, Band 51, Nr. 1, Januar 1979, Seiten 8-14, Weinheim; E.W. SCHOLL et al.: "Vorbeugende und konstruktive Schutzmassnahmen gegen Gas- und Staubexplosionen"**

(73) Patentinhaber: **HÜLS AKTIENGESELLSCHAFT, - RSP Patente / PB 15 - Postfach 13 20, D-4370 Marl 1 (DE)**

(72) Erfinder: **Bollenrath, Franz-Michael, Dr., Lipper Weg 197, D-4370 Marl (DE)**
Erfinder: **Bartmann, Martin, Dr., Burgstrasse 35, D-4350 Recklinghausen (DE)**
Erfinder: **Hentschel, Bernhard, Dr., Breddenkampstrasse 43, D-4370 Marl (DE)**

**EP 0 152 614 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Begasen von Flüssigkeiten, insbesondere zum Inkontaktbringen von gasförmigen und flüssigen Reaktanden, sowie die Verwendung einer Apparatur zur Durchführung dieses Verfahrens.

Bei einer Reihe von Verfahren stellt sich die Aufgabe, eine Flüssigkeit zu begasen, sei es, um ein Gas in einer Flüssigkeit zu dispergieren oder zu lösen, sei es, um eine chemische Reaktion zwischen einem gasförmigen und einem flüssigen Reaktionspartner durchzuführen.

Leitet man nun etwa ein Gas durch die Flüssigkeit, so kommt es nur bei grosser Reaktionsgeschwindigkeit und kleinem Stoffübergangswiderstand zu einer quantitativen Aufnahme des Gases durch die Flüssigkeit. In allen anderen Fällen wird nur ein mehr oder weniger kleiner Anteil des Gases von der Flüssigkeit aufgenommen. Der Restanteil des Gases bleibt ungenutzt.

Dies ist unbefriedigend, weil die eingesetzten Gase oft mit erheblichem Aufwand hergestellt werden müssen.

Setzt man etwa giftige Gase, wie Cyanwasserstoff oder Kohlenmonoxid ein, kommt man um eine aufwendige Vernichtung oder Aufarbeitung nicht herum. Schwierigkeiten treten auch in den Fällen auf, in denen die Flüssigkeit bei der Einwirkung von Gasen zum Schäumen neigt.

Wird Luft, Sauerstoff oder Ozon zur Oxidation organischer Substanzen eingesetzt, muss mit der Bildung hochexplosiver Abgasgemische gerechnet werden. Ein Beispiel hierfür ist die oxidative Kupplungsreaktion 2,6-disubstituierter Phenole. In derartigen Fällen ist ein erheblicher sicherheitstechnischer Aufwand erforderlich, um die Reaktion gefahrlos ablaufen zu lassen. So ist beispielsweise die mit Toluol gesättigte Luft im Bereich von ca. 4 bis 42 °C explosiv.

Aus dem Stand der Technik sind zahlreiche Apparate bekannt, die den innigen Kontakt eines Gases mit einer Flüssigkeit ermöglichen, so etwa in Ullmanns Encyklopädie der technischen Chemie, 4. Auflage, Band 1, Seite 225 ff., (insbesondere Seiten 226 und 227), Band 2, Seite 275 ff., und Band 3, Seite 357 ff., (insbesondere Seite 359). Es handelt sich um Boden- und Füllkörperkolonnen, Sprühvorrichtungen, Düsen und Rührkessel, die neben unterschiedlichen Rührwerkzeugen verschiedene weitere Einbauten aufweisen können. Die mit derartigen Apparaturen arbeitenden Verfahren sind jedoch grundsätzlich mit den beschriebenen Nachteilen behaftet.

Die EP-A-0 087 670 beschreibt ein Verfahren zur Vermeidung einer explosiblen Gasphase in einem vertikalen Gas/flüssig-Reaktor mit einem nach oben abgeschlossenen Hüllrohr und Düsen, durch die Flüssigkeitsstrahlen austreten sollen. Umständlich erscheint dieses Verfahren, weil das gewünschte Gas erst dann dem Reaktor zugeführt werden kann, wenn zuvor Inertgas eingelassen wurde und in der Flüssigkeit so vollständig dispergiert ist, dass kein grösserer zusammenhängender Gasraum mehr vorhanden ist.

Darüber hinaus weist dieses Verfahren zwei Nachteile auf:

1. Die Massnahme, eine Flüssigkeit durch die Düsen zu pressen und damit eine gute Durchmischung zu erzielen, ist dann nicht befriedigend durchführbar, wenn die angesaugte Flüssigkeit erhebliche Mengen gelöster Gasanteile enthält.

2. Das Dispergieren von Gasen mit Strahldüsen erfordert bekanntermassen einen hohen Energiebedarf.

Es gibt vergleichsweise wenige Verfahren, die sich horizontal liegender Reaktoren bedienen.

In einer Reihe von wissenschaftlichen Untersuchungen (Ando et al., Journal of Chemical Engineering of Japan 5, 193 (1972; Ando et al., Int. Chemical Engineering 11, 735 (1971) and Ando et al., AIChE 27, 599 (1981)) wurde der Einfluss einzelner apparativer Kenngrössen auf Gasabsorption und Rührleistungsaufnahme bei horizontal liegenden Reaktoren untersucht. Bei diesen Experimenten bleibt der Anteil der gasförmigen Phase stets deutlich über 30% des Reaktorvolumens und damit das Reaktionsgemisch inhomogen. Dies wirkt sich in einer ungleichmässigen Leistungsaufnahme des Rührers aus.

Ein Ziel der vorliegenden Erfindung war es, ein Verfahren zum Begasen einer Flüssigkeit zu entwickeln, bei dem ein getrennter zusammenhängender Gas- und Flüssigkeitsraum im Reaktor vermieden wird. Stattdessen sollte eine homogene Durchmischung bei möglichst geringem Leistungsaufwand des Rührers erzielt werden.

Ein Ziel einer bevorzugten Ausführungsform der Erfindung war es, die Aufarbeitung oder Kreisführung von giftigen oder explosiven Gasen bzw. Gasgemischen zu vermeiden.

Es wurde jetzt überraschend gefunden, dass man dies erreicht, wenn man mit einem (oder mehreren) horizontal liegenden Rührkessel(n) arbeitet und die Begasung in folgender Weise vornimmt:

1. Der Rührkessel wird zu mehr als 70% mit der zu begasenden Flüssigkeit gefüllt.

2. Die Zufuhr von Gas wird dem Gasaufnahmevermögen der Flüssigkeit angepasst.

3. Die Rührerdrehzahl wird so eingestellt, dass das grösste zusammenhängende Gasvolumen maximal 10% des Rührkesselvolumens ausmacht.

Weitere bevorzugte Ausführungsformen sind Gegenstand der Ansprüche 2 bis 5.

Die Erfindung beinhaltet ferner die Verwendung der im folgenden näher beschriebenen Rührkessel und die Anwendung bei der oxidativen Kupplung von 2,6-Dialkylphenolen sowie bei der Sulfoxidation von Paraffinen.

Die Form des Rührkessels ist im wesentlichen die eines zylindrischen Behälters, bei dem das Verhältnis der Länge zu seinem Durchmesser vorzugsweise grösser als 1 ist. Der Querschnitt des Zylinders ist vorzugsweise kreisförmig. Geringe Abweichungen von dieser bevorzugten Ausführungsform sind möglich. Die Grösse des Kessels ist nicht kritisch. Der Rührkessel sollte horizontal liegen; jedoch sind ohne Beeinträchtigung des

erfinderischen Effekts auch geringfügige Abweichungen von dieser Lage möglich. Die Rührwelle liegt sinnvollerweise axial oder wenigstens koaxial. Geringfügige Abweichungen sind aber auch hier möglich.

Im Prinzip können in dem Kessel alle bekannten Rührtypen verwendet werden (siehe Uhl, »Gray mixing», Band I, Seite 19, (1966)). Bewährt haben sich insbesondere Scheiben-, Balken-, Gitter-, Schrägblatt- und Mig-Rührer sowie Rührer des Pfaudlertyps. Während die herkömmlichen Begasungsreaktoren strömungslenkende Einbauten aufweisen, mit deren Hilfe die Dispergierung des Gases in der Flüssigkeit verbessert werden soll, kommt der Rührkessel in dem vorliegenden Verfahren in einer Variante gerade ohne derartige zusätzliche Einbauten aus, die den Leistungsaufwand für den Rührer beträchtlich erhöhen.

Ändern sich die Stoffwerte der Flüssigkeit (Viskosität, Oberflächenspannung, Dichte, etc.) während der Begasung stark, kann eine andere Variante des Verfahrens vorteilhaft sein, die darin besteht, den Rührkessel mit Stromstörern auszustatten. Diese sollen vorzugsweise nicht im oberen Rührkesselraum liegen. Vorzugsweise liegt der Abstand dieser Stromstörer von der Rührkesselwand zwischen 0,05 und 0,2 D, wobei D der Durchmesser des Rührkessels ist.

In bestimmten Fällen ist es vorteilhaft, den Reaktor durch Trennwände in Kammern zu unterteilen. Diese Wände weisen üblicherweise in der Mitte eine Öffnung für den Durchgang der Welle auf. Eine hermetische Abdichtung der Welle ist nicht erforderlich. Die Trennwand muss zumindest im oberen und unteren Bereich eine Öffnung aufweisen. Während die Öffnung im unteren Bereich im wesentlichen zum Entleeren des Reaktors erforderlich ist, dient die obere Öffnung zum Weitertransport der Reaktionsfluide. Auf diese Weise entsteht auf engstem Raum ein wirtschaftliches Rührkesselkaskadensystem, das bei allen Reaktionen, die nicht 0. Ordnung sind, mit Vorteil eingesetzt werden kann.

Zunächst wird der Kessel mit der Flüssigkeit gefüllt. Sollen keine Fremdgase zugegen sein, kann gegebenenfalls der Reaktor vorher evakuiert werden. Die Gaszufuhr kann entweder vor oder nach Einbringung der Flüssigkeit erfolgen. Der Gaseinlassstutzen sowie die Flüssigkeitszuleitung können an beliebiger Stelle des Reaktors angebracht sein.

Es kann erwünscht sein, die Begasung kontinuierlich zu betreiben und womöglich innerhalb des Rührkessels einen quasistationären Zustand zu schaffen, in dem der Aufnahmegrad des Gases innerhalb des Rührkessels von der einen zur anderen Seite stetig zunimmt. In einem solchen Fall erfolgt die Gaszufuhr zweckmässigerweise von der Seite, an der die begaste Flüssigkeit den Kessel verlässt. Durch geeignete Auswahl von Rührern lässt sich eine pfropfenartige Längsdurchströmung bei Gleich- und Gegenstrom erzielen (vgl. Journal of Chemical Engineering of Japan 8, 472–476, (1975)). Es ist dann möglich, einen Teilstrom der Flüssigkeit abzuziehen, der nur zu einem bestimmten vorgegebenen Anteil mit Gas versetzt wurde. Setzt man ein Gas ein, das mit der Flüssigkeit unter Bildung eines nicht gasförmigen Reaktionsprodukts reagiert, kann das Verfahren so geführt werden, dass überhaupt kein Abgas auftritt. Trotzdem kann es auch in diesem Fall sinnvoll sein, die Umsetzung nach einem bestimmten Umsetzungsgrad abzubrechen und geringe Mengen Abgas auszuschleusen. Es gibt verschiedene Möglichkeiten, die Zufuhr von Gas dem Aufnahmevermögen der Flüssigkeit anzupassen, beispielsweise durch Messung der Reaktionstemperatur oder des Umsatzes.

Die Gaszufuhr kann auch aus einem Vorratsgefäss erfolgen, das gerade die benötigte Gasmenge enthält. Sollte es aus irgendwelchen Gründen erforderlich sein, kann entweder die Begasung selbst oder nur die Gaszufuhr jederzeit unterbrochen werden.

Das grösste zusammenhängende Gasvolumen sollte maximal 10%, besser 2% des Rührkesselvolumens nicht überschreiten. Wünschenswert ist, dass auch in Grosskesseln eine Gasblase von 10 cm Durchmesser das grösste zusammenhängende Gasvolumen darstellt. Die optimale Geschwindigkeit des Rührers, um dies zu erreichen, lässt sich nicht allgemein angeben. Sie hängt unter anderem ab von der Art der Flüssigkeit und des Gases, von dem Aufnahmevermögen der Flüssigkeit, von der Grösse und den Ausmassen des Rührkessels und insbesondere von der Art des Rührers. Jedoch ist der Fachmann in der Lage, in wenigen orientierenden Versuchen die optimale Rührerdrehzahl zu ermitteln.

Die Begasung lässt sich auch in zwei oder mehr hinter- oder nebeneinander geschalteten Rührkesseln durchführen.

Die Begasung wird normalerweise unter Normaldruck durchgeführt. Ist das Lösevermögen des Gases in der Flüssigkeit gering, kann es angezeigt sein, auch bei einem Überdruck zu arbeiten.

Das vorliegende Verfahren weist gegenüber den aus dem Stand der Technik bekannten Verfahren eine Reihe von Vorteilen auf:

1. Es ist möglich, die gesamte erforderliche Gasmenge über einen beliebig langen Zeitraum in der Flüssigkeit zu verteilen.

2. Trotz der Füllung des Kessels mit nur 70% Flüssigkeit treten erstaunlicherweise keine Überflutungszustände auf, die einen Zusammenbruch der Begasung bewirken würden.

3. Grössere zusammenhängende Grenzflächen zwischen Gas und Flüssigkeit werden vermieden.

4. Es ist möglich, bei einer chemischen Reaktion einen beliebigen vorgegebenen Umsatz zu erzielen.

5. Der Rührkessel kommt ohne strömungslenkende Einbauten aus, die zu einer verstärkten Leistungsaufnahme des Rührers führen würden.

6. Durch die gleichmässige Verteilung des Gases in der Flüssigkeit kommt es zu einem ausserordentlich ruhigen Rührverlauf mit geringem Leistungseintrag.

7. Bei richtig gewählter Rührerdrehzahl kommt es nicht zur Ausbildung grösserer Gasräume, die

insbesondere in der Nähe der heissen Rührwelle die Explosionsgefahr erhöhen könnten.

8. Mit Hilfe des Verfahrens sind höhere Raum/Zeit-Ausbeuten zu erzielen.

9. Das Verfahren zeichnet sich durch Einfachheit sowie grosse Betriebs- und Explosionssicherheit aus.

Das erfindungsgemässe Verfahren ist vor allem dann den bekannten Verfahren nach dem Stand der Technik überlegen, wenn sich eine gasförmige Komponente nur sehr langsam in einer Flüssigkeit löst.

Beispielhaft seien hier erwähnt:

1. Die oxidative Kupplung von in ortho-Stellung disubstituierten Phenolen zu Polyphenylenethern (vgl. z.B. Bühler, «Spezialplaste», Akademieverlag 1978, DE-OS 3 224 692).

2. Die Sulfoxidation von Paraffinen nach dem Licht-Wasser-Verfahren gemäss nachfolgender schematischer Reaktionsgleichung

$$RH + 2SO_2 + O_2 + H_2O \xrightarrow{h\nu} R\text{-}SO_3H + H_2SO_4$$

$$R\text{-}SO_3H + NaOH \longrightarrow RSO_3Na + H_2O$$

(vgl. Ullmanns Encyklopädie der technischen Chemie, 4. Auflage, Band 22, Seite 478 ff., 1982).

Die Abbildungen 1 und 2 zeigen zwei Ausführungsformen der erfindungsgemässen Reaktoren.

Abbildung 1 zeigt einen um den Winkel α gegenüber der horizontalen Lage geneigten Rührkessel mit durchgehender Welle in einer schematischen Schnittansicht. An Stelle 1 könnte z.B. Reaktionsgas zugeführt, an Stelle 4 Reaktionsflüssigkeit zugeführt, an Stelle 2 Reaktionsprodukt abgezogen werden. Position 2 könnte als Entgasungsstutzen genutzt werden.

Abbildung 2 zeigt einen ähnlichen Reaktor mit einer aussermittigen Rührwelle.

Beispiel 1

Diskontinuierliche Polymerisation von 2,6-Dimethylphenol zu Polyphenylenether

Katalysatorherstellung:

Man löst 7,8 g $CuCO_3 \cdot Cu(OH)_2$ in 23 g 48%iger Bromwasserstoffsäure auf und gibt die erhaltene homogene Lösung unter Rühren in 120 g Morpholin.

In einem Reaktor von 5 l Inhalt werden 126 g der Katalysatorlösung, 4140 g Toluol, 659 g Methanol sowie 955 g einer 50%igen Lösung von 2,6-Dimethylphenol in Toluol vorgelegt. Anschliessend werden 19,7 g Sauerstoff innerhalb von 1 Stunde eingeführt. Der Reaktor wird mit einem Paddelrührer bei einer Drehzahl von 300 $min^{-1}$ gerührt. Es wird kein Gas abgeführt. Anschliessend wird die Reaktion auf übliche Weise durch Zugabe von Essigsäure abgestoppt (vgl. z.B. Patentanmeldung P 33 13 864.8).

Beispiel 2

Kontinuierliche Polymerisation von 2,6-Dimethylphenol zu Polyphenylenether.

In eine Rührkesselkaskade, bestehend aus 3 Reaktoren von je 5 l Inhalt gemäss Figur 1, werden kontinuierlich 1,17 kg/Stunde einer Reaktionslösung, bestehend aus 25 g Katalysatorlösung gemäss Beispiel 1, 828 g Toluol, 132 g Methanol und 191 g einer 50%igen Lösung von 2,6-Dimethylphenol in Toluol sowie 3,94 g Sauerstoff, eingeleitet. Gleichzeitig werden dem Reaktor kontinuierlich 1,17 kg PPE-haltige Reaktionslösung entnommen. Die Reaktoren sind ständig zu mehr als 70% mit der Reaktionslösung gefüllt. Die durchschnittliche Verweilzeit in der Rührkesselkaskade beträgt 45 bis 90 Minuten.

Beispiel 3

Sulfoxidation nach dem Licht-Wasser-Verfahren

In einen Reaktor, wie unter Figur 1 beschrieben, ausgerüstet mit mehreren Quecksilberhochdruckbrennern und einem Gesamtvolumen von 280 l, werden kontinuierlich einerseits Wasser und Frischparaffin, andererseits $SO_2$ und $O_2$ eingeleitet. Das den Reaktor verlassende Gemisch besteht aus 25 Teilen Paraffin und einem Teil wässrige Phase. Dieses Gemisch wird einem Abscheider zugeführt. Es entfällt der Kreisgasstrom. Es tritt kein Abgas auf.

Beispiel 4

Kontinuierliche geregelte Polymerisation von 2,6-Dimethylphenol zu Polyphenylenether

Man verfährt wie in Beispiel 2 beschrieben, setzt jedoch dem 2,6-Dimethylphenol 0,45 Molprozent 2,4,6-Trimethylphenol zu. Durch diese Massnahme lässt sich erreichen, dass der J-Wert des erhaltenen Polyphenylenethers stets unter 85 ml/g bleibt (gemessen nach DIN 53 728 in Chloroform bei 25 °C). Durch Zusatz von 0,75 Molprozent 2,4,6-Trimethylphenol lässt sich erreichen, dass der J-Wert unter 60 ml/g bleibt.

Die Abbildungen 1 bis 3 zeigen drei mögliche Ausführungsformen des Rührkessels in Längs- und Querschnitt. Die Pfeile 1 und 4 kennzeichnen die Zuleitungen der Edukte, nämlich der zu begasenden Flüssigkeit und des Gases. Pfeil 3 steht für den Abzug der Flüssigkeit, Pfeil 2 deutet die Möglichkeit an, Gas aus dem Rührkessel zu entfernen.

**Patentansprüche**

1. Verfahren zur Begasung von Flüssigkeiten unter Verwendung eines oder mehrerer horizontal liegender Rührkessel, dadurch gekennzeichnet, dass man

1. den bzw. die Rührkessel zu mehr als 70% mit der zu begasenden Flüssigkeit füllt,

2. die Zufuhr von Gas dem Aufnahmevermögen der Flüssigkeit anpasst und

3. die Rührerdrehzahl so einstellt, dass das grösste zusammenhängende Gasvolumen maximal 10% des Rührkesselvolumens ausmacht.

2. Verfahren nach Anspruch 1, dadurch gekennzeichnet, dass man den bzw. die Rührkessel zu 80 bis 90% mit der zu begasenden Flüssigkeit füllt.

3. Verfahren nach Anspruch 1 oder 2, dadurch gekennzeichnet, dass das grösste zusammenhängende Gasvolumen maximal 2% des Rührkesselvolumens ausmacht.

4. Verfahren nach den Ansprüchen 1 bis 3, dadurch gekennzeichnet, dass eine Gasblase mit einem Durchmesser von 10 cm das grösste zusammenhängende Gasvolumen darstellt.

5. Verfahren nach den Ansprüchen 1 bis 4, dadurch gekennzeichnet, dass man die Begasung kontinuierlich durchführt.

6. Verfahren nach Anspruch 1, dadurch gekennzeichnet, dass der oder die verwendeten Rührkessel im wesentlichen die Form eines zylindrischen Behälters mit einem Verhältnis von Länge zu Durchmesser von wenigstens 1 haben und eine axiale oder wenigstens koaxiale Rührwelle aufweisen.

7. Verfahren nach Anspruch 6, dadurch gekennzeichnet, dass der bzw. die Rührkessel mit Stromstörern ausgestattet sind, die vorzugsweise nicht im oberen Rührkesselraum liegen und einen Abstand x (mit $0{,}05\,D < X < 0{,}2\,D$; D = Durchmesser des Kessels) von der Rührkesselwand aufweisen.

8. Verfahren nach den Ansprüchen 6 und 7, dadurch gekennzeichnet, dass der Rührkessel durch Trennwände unterteilt ist, die eine Öffnung als Wellendurchgang sowie eine Öffnung jeweils im oberen und unteren Teil aufweisen.

9. Verfahren nach den Ansprüchen 1 bis 5 unter Verwendung eines horizontal liegenden Reaktors gemäss den Ansprüchen 6 bis 8, dadurch gekennzeichnet, dass man eine Lösung eines 2,6-Dialkylphenols in einem organischen Lösemittel, die zusätzlich einen Kupferaminkatalysator und gegebenenfalls einen Aktivator enthält, vorzugsweise mit Sauerstoff oder $O_2$-haltigen Gasgemischen begast.

10. Verfahren nach den Ansprüchen 5 und 9, dadurch gekennzeichnet, dass man dem 2,6-Dialkylphenol ein substituiertes Phenol der Formel

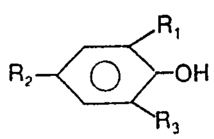

,

wobei $R_1$, $R_2$ und $R_3$ jeweils für einen Alkylrest mit 1 bis 6 C-Atomen stehen, zusetzt.

11. Verfahren nach den Ansprüchen 1 bis 5 unter Verwendung eines horizontal liegenden Reaktors gemäss den Ansprüchen 6 bis 8, dadurch gekennzeichnet, dass man ein Gemisch aus Paraffin und Wasser mit einem Gemisch aus Schwefeldioxid und Sauerstoff begast.

**Claims**

1. A process for treating a liquid with a gas, using one or more horizontally arranged stirred kettles, characterized in that

1. the stirred kettle(s) is or are filled to a level of more than 70% with the liquid which is to be treated with gas,

2. the feed of gas is adapted to the absorption capacity of the liquid and

3. the rate of rotation of the stirrer is adjusted such that the largest continuous gas volume corresponds to at most 10% of the capacity of the stirred kettle.

2. A process as claimed in claim 1, characterized in that the stirred kettle(s) is or are filled to a level of 80 to 90% with the liquid which is to be treated with gas.

3. A process as claimed in claim 1 or 2, characterized in that the largest continuous gas volume amounts to at most 2% of the capacity of the stirred kettle.

4. A process as claimed in any of claims 1 to 3, characterized in that a gas bubble having a diameter of 10 cm represents the largest continuous gas volume.

5. A process as claimed in any of claims 1 to 4, characterized in that the treatment with gas is carried out continuously.

6. A process as claimed in claim 1, characterized in that the stirred kettle(s) to be used has or have essentially the form of a cylindrical vessel having a length/diameter ratio of at least 1 and an axial or at least coaxial stirrer shaft.

7. A process as claimed in claim 6, characterized in that the stirred kettle(s) is or are provided with baffles, which preferably are not located in the upper stirred kettle space and are at a distance x (where $0.05D < x < 0.2\,D$; D = diameter of the kettle) from the wall of the stirred kettle.

8. A process as claimed in claims 6 and 7, characterized in that the stirred kettle is subdivided by partitions, which have one opening as a shaft passage and one opening in each of the upper and lower parts.

9. A process as claimed in any of claims 1 to 5, using a horizontally arranged reactor according to any of claims 6 to 8, characterized in that a solution of a 2,6-dialkylphenol in an organic solvent, which solution additionally contains a copper amine catalyst and if appropriate an activator, is treated with gas, preferably with oxygen gas or an $O_2$-containing gas mixture.

10. A process as claimed in claims 5 and 9, characterized in that a substituted phenol of the formula

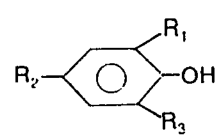

,

$R_1$, $R_2$ and $R_3$ each representing an alkyl radical having 1 to 6 C atoms, is added to the 2,6-dialkylphenol.

11. A process as claimed in any of claims 1 to 5, using a horizontally arranged reactor according to any of claims 6 to 8, characterized in that a mixture of paraffin and water is treated with a gas mixture of sulphur and oxygen.

**Revendications**

1. Procédé pour la gazéification de liquides en utilisant une ou plusieurs chaudières d'agitation situées horizontalement, caractérisé par le fait:

1. que l'on remplit la ou les chaudières d'agitation à plus de 70% avec le liquide à gazéifier,

2. que l'on adapte l'arrivée du gaz au pouvoir d'absorption du liquide, et

3. que l'on ajuste la vitesse de rotation de l'agitateur de manière que la majeure partie du volume gazeux cohérent fasse au maximum 10% du volume de la chaudière d'agitation.

2. Procédé selon la revendication 1, caractérisé par le fait que l'on remplit la ou les chaudières d'agitation jusqu'à 80–90% avec le liquide à gazéifier.

3. Procédé selon la revendication 1 ou 2, caractérisé par le fait que la majeure partie du gaz cohérent représente au maximum 2% du volume de la chaudière d'agitation.

4. Procédé selon les revendications 1 à 3, caractérisé par le fait qu'une boule gazeuse d'un diamètre de 10 cm représente la majeure partie du volume gazeux cohérent.

5. Procédé selon les revendications 1 à 4, caractérisé par le fait que l'on effectue la gazéification en continu.

6. Procédé selon la revendication 1, caractérisé par le fait que la ou les chaudières d'agitation présente(nt) essentiellement la forme d'un réservoir cylindrique avec un rapport de la longueur au diamètre au moins égal à 1 et un arbre d'agitation axial ou au moins coaxial.

7. Procédé selon la revendication 6, caractérisé par le fait que la ou les chaudières d'agitation sont équipées de perturbateurs d'écoulement qui ne se trouvent pas de préférence dans la chambre supérieure de la chaudière d'agitation et présentent une distance x jusqu'à la paroi de la chaudière (avec l'inégalité: $0,05\ D < x < 0,2\ D$; D = diamètre de la chaudière).

8. Procédé selon les revendications 6 et 7, caractérisé par le fait que la chaudière d'agitation est subdivisée par les parois de séparation qui présentent une ouverture en tant que passage des ondes, ainsi qu'une ouverture dans la partie supérieure et dans la partie inférieure.

9. Procédé selon les revendications 1 à 5, avec utilisation d'un réacteur situé horizontalement selon les revendications 6 à 8, caractérisé par le fait que l'on gazéifie, de préférence avec de l'oxygène ou avec des mélanges gazeux renfermant de l'oxygène, une solution d'un 2,6-dialkyl-phénol dans un solvant organique renfermant complémentairement un catalyseur cuivre-amine et le cas échéant un activant.

10. Procédé selon les revendications 5 et 9, caractérisé par le fait que l'on ajoute au 2,6-dialkyl-phénol un phénol substitué de la formule

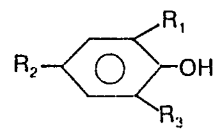

dans laquelle $R_1$, $R_2$ et $R_3$ représentent chacun un reste alkyle comportant de 1 à 6 atomes de carbone.

11. Procédé selon les revendications 1 à 5, avec utilisation d'un réacteur situé horizontalement selon les revendications 6 à 8, caractérisé par le fait que l'on gazéifie un mélange de paraffine et d'eau avec un mélange de dioxyde de soufre et d'oxygène.

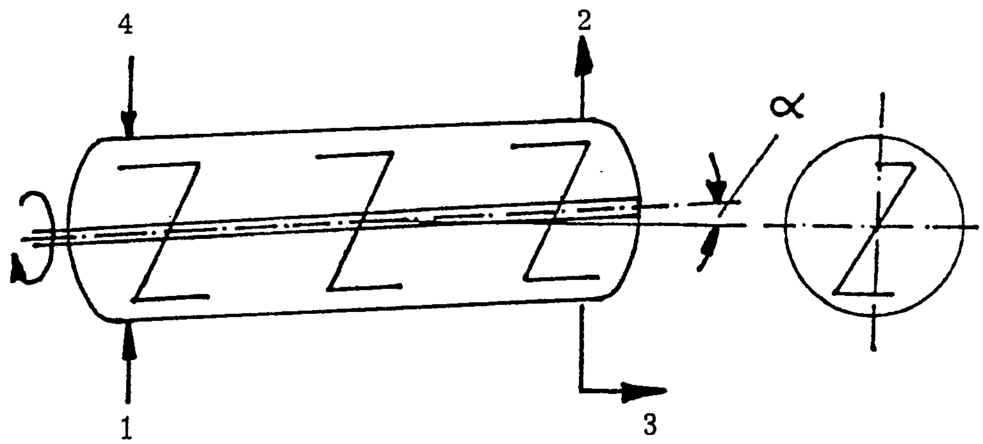


Abb. 1

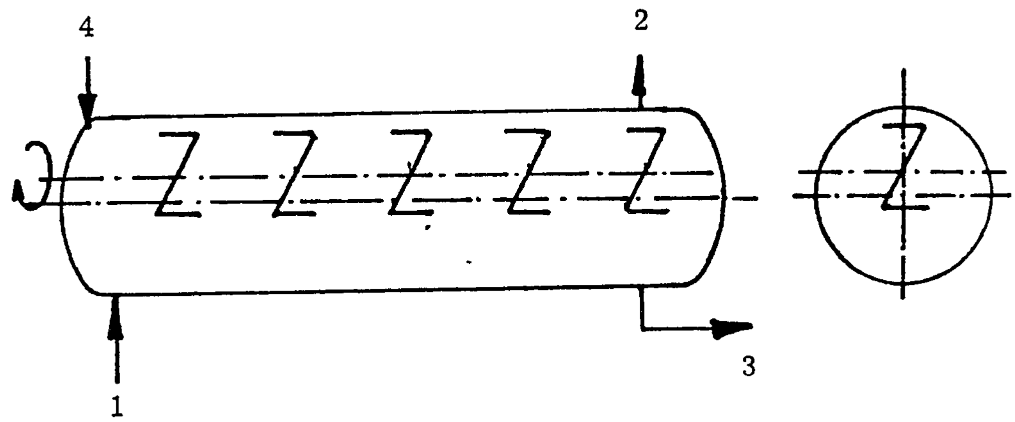


Abb. 2

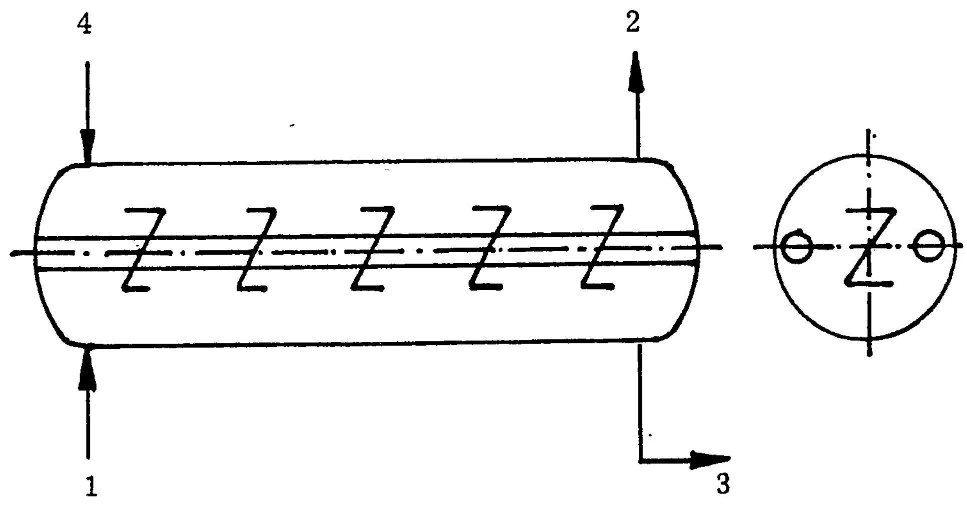


Abb. 3